# EUROPÄISCHE PATENTSCHRIFT

(11) **EP 0 715 980 B1**
(45) Veröffentlichungstag und Bekanntmachung des Hinweises auf die Patenterteilung: **03.03.1999**
(21) Anmeldenummer: 95117026.5
(22) Anmeldetag: 28.10.1995
(51) Int. Cl.: B60J 3/02, B29C 49/24

(54) **Verfahren zum Herstellen eines mit Dekormaterialzuschnitten umhüllten Sonnenblendenkörpers einer Fahrzeugsonnenblende**
Method for making a visor body of a vehicle sun visor, encapsulated by decorative material
Procédé pour la fabrication d'un corps de pare-soleil d'un pare-soleil d'un véhicule encapsulé de matériau décoratif

(30) Priorität: 07.12.1994 DE 4443489
(43) Veröffentlichungstag der Anmeldung: 12.06.1996
(73) Patentinhaber: Johnson Controls Interiors GmbH, 42285 Wuppertal (DE)
(72) Erfinder: Eyd, Peter, D-79189 Bad Krozingen (DE)

(56) Entgegenhaltungen:
- EP-A- 0 401 760
- EP-A- 0 562 085
- EP-A- 0 612 636
- EP-A- 0 652 099
- DE-A- 2 910 631
- DE-A- 3 145 808
- GB-A- 1 129 418
- US-A- 3 655 849
- PATENT ABSTRACTS OF JAPAN vol. 10 no. 257 (M-513) ,3.September 1986 & JP-A-61 083019 (TACHIKAWA SPRING CO) 26.April 1986,

## Beschreibung

Die Erfindung bezieht sich auf ein Verfahren zum Herstellen eines mit Dekormaterialzuschnitten umhüllten Sonnenblendenkörpers einer Fahrzeugsonnenblen.

Blasgeformte Sonnenblendenkörper sind in verschiedenen Ausführungsformen (vgl. DE-29 10 631 A1, EP-0 401 760 B1, EP-0 562 085 A1, EP-0 612 636 A2) bekannt geworden. Obgleich sich blasgeformte Sonnenblendenkörper in der Praxis schon bewährt haben, sind sie nicht von Mängeln frei. Die vorliegende Erfindung bezweckt, die bisher als erforderlich angesehene Vielzahl der Verfahrensschritte zum Herstellen eines mit Dekormaterialzuschnitten umhüllten Sonnenblendenkörpers zu reduzieren, um eine wirtschaftlichere Herstellung zu ermöglichen. Bisher wurde so vorgegangen, daß zunächst ein nackter blasgeformter Sonnenblendenkörper hergestellt und zwischengelagert wurde. In einem nachgeschalteten Fertigungsprozeß wurde sodann jeder einzelne blasgeformte Sonnenblendenkörper mit Dekormaterialzuschnitten umhüllt, und zwar unter Verwendung einer Hochfrequenz-Schweißvorrichtung mit einem eine Unter- und eine Oberelektrode aufweisenden Werkzeug. Die Verfahrensschritte hierfür umfassen: Auflegen eines ersten Dekormaterialzu schnitts auf die Unterelektrode, Auflegen eines blasgeformten Sonnenblendenkörpers auf den ersten Dekormaterialzuschnitt, Auflegen eines zweiten Dekormaterialzuschnitts auf den blasgeformten Sonnenblendenkörper, Zusammenfahren der Elektroden, durch Anlegen von Hochfrequenz Aneinanderschweißen der Dekormaterialbahnen folgend der Peripherie des Sonnenblendenkörpers, Öffnen des Werkzeugs, Herausnehmen des Sonnenblendenkörpers und schließlich Abreißen des Dekormaterial-Überstands vom Sonnenblendenkörper.

Durch die JP-A-86/083019 ist ein Verfahren zum Herstellen einer Innenausrüstung, z. B. einer Sonnenblende bekanntgeworden, gemäß dem an der Innenfläche einer Blasform eine Außenhaut angeordnet wird, worauf durch die Blasform ein Sonnenblendenkörper blasgeformt wird. Dabei wird auf die Außenfläche des Sonnenblendenkörpers die Außenhaut einteilig angeklebt. Die Außenhaut ist, bevor sie an der Innenfläche einer Blasform angeordnet wird, über einen gewissen Teilbereich an ihrer Rückseite einer nichtklebenden Behandlung unterworfen und an einer an diesen Teilbereich unmittelbar angrenzenden Seite mit einem eine Öffnung bildenden Spalt versehen worden. Auf diese Weise soll zwischen dem blasgeformten Sonnenblendenkörper und der Außenhaut eine nicht verbundene Fläche zwecks Bildung einer durch den Spalt hindurch zugänglichen Artikelaufnahme entstehen. In dieser Druckschrift ist weiterhin offenbart, die Außenhaut an den beiden Seiten des Sonnenblendenkörpers anzukleben.

Die Aufgabe der vorliegenden Erfindung besteht darin, ein Verfahren nebst der einzelnen Verfahrensschritte zum Herstellen eines mit Dekormaterialzuschnitten umhüllten Sonnenblendenkörpers einer Fahrzeugsonnenblende aufzuzeigen, das sich durch Einsparen von Verfahrensschritten und damit kostengünstigerer Durchführbarkeit auszeichnen soll.

Diese Aufgabe wird erfindungsgemäß durch die folgenden Verfahrensschritte gelöst:
- aus einem thermoplastischen Material wird ein Folienschlauch extrudiert,
- ein Folienschlauchabschnitt des Folienschlauchs wird in eine offene Blasform eingebracht,
- während oder bevor der Folienschlauch in die offene Blasform eingebracht wird, werden die Dekormaterialzuschnitte an die Stützflächen der Blasform angelegt,
- in den Folienschlauch wird zumindest ein Lagergehäuse für eine Sonnenblendenachse und eine mit dem Lagergehäuse verbundene Feder zum Klemmen der Sonnenblendenachse eingebracht,
- die Blasform wird geschlossen und dabei der Folienschlauch an den Enden zusammengequetscht,
- gleichzeitig werden umlaufende Randbereiche der Dekormaterialzuschnitte aneinanderliegend zwischen den Blasformhälften eingespannt,
- in den Folienschlauch wird durch einen Dekormaterialzuschnitt hindurch zumindest eine Öffnung eingebracht,
- durch die zumindest eine Öffnung wird Luft in den Folienschlauch eingeblasen,
- der Folienschlauch wird gegen die Dekormaterialzuschnitte und die diese umgebenden Stützflächen der Blasform blasgeformt, wobei die Dekormaterialzuschnitte mitgeformt und innig mit dem Folienschlauch verbunden werden,
- der Sonnenblendenkörper wird nach einer seinem Verfestigen dienenden Verweilzeit der zuvor wieder geöffneten Blasform entnommen,
- der durch die aneinanderliegenden Randbereiche der Dekormaterialzuschnitte gebildete Flansch, der den Sonnenblendenkörper peripherisch umgibt, wird vom Sonnenblendenkörper abgetrennt.

Ein besondere Vorteil der Erfindung ist darin zu sehen, daß das Dekormaterial beim Blasformen des Sonnenblendenkörpers sogleich mitgeformt wird und dabei eine innige Verbindung mit dem den eigentlichen Sonnenblendenkörper ausmachenden thermoplastischen Kunststoffmaterial eingeht, während ein anderer besonderer Vorteil darin besteht, daß der Sonnenblendenkörper zugleich mit den notwendigen Funktionselementen (Lager, Feder) versehen ist.

Wenn im Durchlaufverfahren gearbeitet wird, dürften sich im Hinblick auf die innige Verbindung zwischen dem Dekormaterial und dem Material des Folienschlauchs keine Probleme ergeben. Gleichwohl kann vorgesehen sein, daß der Folienschlauch bis zum Abschluß des Blasvorgangs auf Massetemperatur gehalten wird, zwecks Gewährleistung eines innigen Verbunds mit dem Dekormaterialzuschnitten.

Damit der Sonnenblendenkörper nicht in ein separates Werkzeug zum Abtrennen des Flanschs eingelegt werden muß, ist gemäß Anspruch 3 mit Vorteil vorgesehen, daß eine Blasform verwendet wird, deren relativ zueinander verfahrbare Formhälften als Stanz-/Schneidwerkzeuge ausgebildet sind, um einen Überstand der Dekormaterialzuschnitte an der Sonnenblendenkörper-Peripherie nach dem Blasformvorgang abzutrennen.

Als Dekormaterial können Kunststoffolien zur Anwendung kommen aber auch Zuschnitte aus Gewebe, Gewirke oder Gestricke wie auch Kunst- oder Naturleder. Bei der Verwendung von Dekormaterial ohne jegliche duktile Eigenschaften kann es angezeigt sein, beim Blasformen Vorsorge dafür zu treffen, daß das Blasformwerkzeug nach Art eines Schlupfrahmens arbeitet, um ein Nachrutschen von Dekormaterial zu ermöglichen. Es ist auch denkbar, das Blasformwerkzeug mit Öffnungen zum Anlegen einer Unterdruckvorrichtung auszubilden, um die Dekormaterialzuschnitte mittels Vakuum an die Stützflächen der Blasform anzusaugen.

Ergänzend können noch folgende Maßnahmen getroffen werden:
- Einbringen einer vorbereiteten Trägerplatte in den Hohlkörper als Aufnahme für die Achsfeder (Rastfeder) einerseits und formschlüssiges Verankern derselben innerhalb des Hohlkörpers in der vordefinierten Position. Das Einbringen erfolgt bevor der Folienschlauch aus thermoplastischem Material vom Blaswerkzeug verschlossen wird.
- Die Verankerung kann z. B. in der Weise erfolgen, daß die Trägerplatte entlang der planparallel zur Hohlkörperwandung verlaufenden Fläche eine Vielzahl von Erhebungen hat wie z. B. Noppen, Dorne oder Stege. Bei einer materialeinheitlichen Gestaltung von Blasformkörper und Trägerplatte und bei einer etwas größeren Dicke der Trägerplatte im Vergleich zur Solldicke des Blendenkörpers innen erfolgt ein teilweises Verschmelzen der Erhebungen mit der Hohlkörperwandung,
- In Verbindung mit der in den Hohlkörper einzubringenden Trägerplatte können auch weitere Distanzstege - ein- oder mehrstückig mit der Trägerplatte verbunden - zur Aussteifung des Hohlkörpers mit eingebracht werden.
- Die Sonnenblendenachse kann bereits mit der Trägerplatte funktional verbunden (vormontiert) sein, bevor die Einheit geeignet im Blaswerkzeug positioniert wird.
- Bei Einsatz von elektrisch betriebenem Zubehör in der Sonnenblende wie z. B. beleuchtete Spiegel, können die Anschlußkabel zum Bordnetz über die Sonnenblendenachse geführt und bereits beim Blasformvorgang innerhalb des Hohlkörpers zu liegen kommen.
- Das verfahrensgemäße Einblasen von Luft geschieht zweckmäßigerweise über eine Öffnung in der Spiegelaufnahme (Vertiefung).
- Die Aufnahme von Kosmetikspiegeln u. ä. geschieht zweckmäßigerweise über Hinterschnitte wie Klipsnasen am Blasformkörper.
- Durch entsprechende Gestaltung der Ringspaltdüse eines Extruders kann es vorteilhaft sein, bestimmte Teile des Sonnenblendenkörpers mit einer anderen Wandstärke oder mit nach innen weisenden Rippen zu gestalten. Damit läßt sich z. B. im Bereich zwischen Achslager und Gegenlager die Formsteifigkeit und gegebenenfalls die Wärmestabilität des Hohlkörpers in weitem Maße beeinflussen. Zugleich ist eine Materialanhäufung im Bereich der Trägerplatte (siehe weiter oben) für eine dauerhafte Verbindung zwischen dieser und der Hohlkörperwandung hilfreich.

## Patentansprüche

1. Verfahren zum Hersteilen eines mit zwei Dekormaterialzuschnitten umhüllten Sonnenblendenkörpers einer Fahrzeugsonnenblende mit den Schritten:
- aus einem thermoplastischen Material wird ein Folienschlauch extrudiert,
- ein Folienschlauchabschnitt des Folienschlauchs wird in eine offene Blasform eingebracht,
- während oder bevor der Folienschlauch in die offene Blasform eingebracht wird, werden die Dekormaterialzuschnitte an die Stützflächen der Blasform angelegt,
- in den Folienschlauch wird zumindest ein Lagergehäuse für eine Sonnenblendenachse und eine mit dem Lagergehäuse verbundene Feder zum Klemmen der Sonnenblendenachse eingebracht,
- die Blasform wird geschlossen und dabei der Folienschlauch an den Enden zusammengequetscht,
- gleichzeitig werden umlaufende Randbereiche der Dekormaterialzuschnitte aneinanderliegend zwischen den Blasformhälften eingespannt,
- in den Folienschlauch wird durch einen Dekormaterialzuschnitt hindurch zumindest eine Öffnung eingebracht,
- durch die zumindest eine Öffnung wird Luft in den Folienschlauch eingeblasen,
- der Folienschlauch wird gegen die Dekormaterialzuschnitte und die diese umgebenden Stützflächen der Blasform blasgeformt, wobei die Dekormaterialzuschnitte mitgeformt und innig mit dem Folienschlauch verbunden werden,
- der Sonnenblendenkörper wird nach einer seinem Verfestigen dienenden Verweilzeit der zuvor wieder geöffneten Blasform entnommen,
- der durch die aneinanderliegenden Randbereiche der Dekormaterialzuschnitte gebildete Flansch, der den Sonnenblendenkörper peripherisch umgibt, wird vom Sonnenblendenkörper abgetrennt.

2. Verfahren nach Anspruch 1, dadurch gekennzeichnet, daß der Folienschlauch bis zum Abschluß des Blasvorgangs auf Massetemperatur gehalten wird, zwecks Gewährleistung eines innigen Verbunds mit den Dekormaterialzuschnitten.

3. Verfahren nach Anspruch 1 oder 2, dadurch gekennzeichnet, däß eine Blasform verwendet wird, deren relativ zueinander verfahrbare Formhälften als Stanz-/Schneidwerkzeuge ausgebildet sind, um einen Überstand der Dekormaterialzuschnitte an der Sonnenblendenkörper-Peripherie nach dem Blasformvorgang abzutrennen.

## Claims

1. Method for the production of a sun visor body, covered by two decorative material blanks, of a vehicle sun visor, having the following steps:
- a film tube is extruded from a thermoplastic material,
- a section of the film tube is placed into an open blowing mould,
- as or before the film tube is placed into the open blowing mould, the decorative material blanks are positioned against the supporting surfaces of the blowing mould,
- at least one bearing housing for a sun visor spindle and a spring which is connected to the bearing housing and is intended for gripping the sun visor spindle, are placed into the film tube,
- the blowing mould is closed and in the process the ends of the film tube are pinched together,
- at the same time, peripheral edge regions of the decorative material blanks are clamped such that they lie against one another between the blowing mould halves,
- at least one opening is made in the film tube, through a decorative material blank,
- air is blown into the film tube through the at least one opening,
- the film tube is blow-moulded against the decorative material blanks and the supporting surfaces of the blowing mould, which surfaces surround said blanks, the decorative material blanks being moulded at the same time and being intimately connected to the film tube,
- after a residence time used for its solidification, the sun visor body is removed from the already re-opened blowing mould,
- the flange, which is formed by those edge regions of the decorative material blanks which lie against one another and which peripherally surrounds the sun visor body, is separated from the sun visor body.

2. Method according to Claim 1, characterized in that the film tube is kept to material temperature until the blowing procedure is finished, for the purpose of ensuring an intimate bond with the decorative material blanks.

3. Method according to Claim 1 or 2, characterized in that use is made of a blowing mould whose mould halves, which can be moved relative to one another, are designed as punching/cutting tools in order, after the blow-moulding procedure, to sever a protruding length of the decorative material blanks at the periphery of the sun visor body.

## Revendications

1. Procédé pour la fabrication d'un corps de pare-soleil, encapsulé de deux coupons de matériau décoratif, d'un pare-soleil pour véhicule, comportant les opérations suivantes:
- on extrude un tuyau souple en feuille très mince en une matière thermoplastique,
- on dépose une portion du tuyau souple en feuille très mince dans un moule de soufflage ouvert,
- pendant ou avant le dépôt du tuyau souple en feuille très mince dans le moule de soufflage, on pose les coupons de matériau décoratif sur les surfaces d'appui du moule de soufflage,
- dans le tuyau souple en feuille très mince, on introduit au moins un corps de palier pour un axe du pare-soleil et un ressort assemblé au corps de palier pour serrer l'axe de pare-soleil,
- on ferme le moule de soufflage et on pince de la sorte le tuyau souple en feuille très mince à ses extrémités,
- en même temps, les zones de bord extérieur des coupons de matériau décoratif sont serrées l'une contre l'autre entre les moitiés du moule de soufflage,
- on introduit dans le tuyau souple en feuille très mince au moins une ouverture à travers un coupon de matériau décoratif,
- on souffle de l'air dans le tuyau souple en feuille très mince à travers ladite ouverture,
- on moule par soufflage le tuyau souple en feuille très mince contre les coupons de matériau décoratif et contre les surfaces d'appui du moule de soufflage entourant ceux-ci, les coupons de matériau décoratif étant ainsi moulés avec et étroitement unis au tuyau souple en feuille très mince,
- on retire le corps de pare-soleil hors du moule de soufflage préalablement rouvert, après un temps de séjour servant à son durcissement, et
- on sectionne la bride formée par les zones de bord extérieur, serrées l'une contre l'autre, des coupons de matériau décoratif, qui entoure entièrement le corps de pare-soleil.

2. Procédé suivant la revendication 1, caractérisé en ce que le tuyau souple en feuille très mince est maintenu à la température de la masse, jusqu'à l'achèvement de l'opération de soufflage, afin de garantir une union étroite avec les coupons de matériau décoratif.

3. Procédé suivant la revendication 1 ou 2, caractérisé en ce que l'on utilise un moule de soufflage, dont les moitiés de moule, déplaçables l'une par rapport à l'autre, sont constituées par des outils d'estampage/de coupe, pour sectionner un excédent des coupons de matériau décoratif à la périphérie du corps de pare-soleil, après l'opération de moulage par soufflage.
